# EUROPÄISCHE PATENTSCHRIFT

(11) **EP 0 340 614 B1**
(45) Veröffentlichungstag und Bekanntmachung des Hinweises auf die Patenterteilung: **31.03.1993**
(21) Anmeldenummer: 89107523.6
(22) Anmeldetag: 26.04.1989
(51) Int. Cl.: B60D 1/02

(54) **Anhängerkupplung für Lastkraftfahrzeuge, landwirtschaftliche Fahrzeuge oder dgl.**
Trailer hitch for trucks, agricultural vehicles or the like
Attelage pour camions, véhicules agricoles ou similaires

(30) Priorität: 04.05.1988 DE 3815054
(43) Veröffentlichungstag der Anmeldung: 08.11.1989
(73) Patentinhaber: Berbott, Gerhard, D-61389 Schmitten (DE)
(72) Erfinder: Berbott, Gerhard, D-61389 Schmitten (DE)
(74) Vertreter: Quermann, Helmut, Dipl.-Ing.

(56) Entgegenhaltungen:
- BE-A- 758 486
- DE-A- 1 580 618
- DE-A- 1 914 348
- DE-U- 6 807 605
- DE-U- 8 226 981
- US-A- 2 492 914
- US-A- 4 023 823

## Beschreibung

Die Erfindung betrifft eine Anhängerkupplung für Lastkraftfahrzeuge, landwirtschaftliche Fahrzeuge oder dgl., die vorne am Fahrzeug angeordnet und mit einem in eine senkrechte Ausnehmung einführbaren Kupplungsbolzen versehen ist, der in eingeführter Stellung eine ringförmige Anhängeröse durchsetzt, wobei die Anhängerkupplung eine sich in Richtung der Ausnehmung für den Kupplungsbolzen seitlich verjüngende Aufnahmeöffnung für die Anhängeröse aufweist, sowie der Abstand der Mittelachse des Kupplungsbolzens von den Anlagestellen der Anhängeröse in der Aufnahmeöffnung dem Abstand der Mittelachse der Anhängeröse von den Anlagestellen entspricht.

Eine vorne am Fahrzeug angeordnete Anhängerkupplung dient im wesentlichen nur zum Rangieren des Anhängers. Sie ist daher einfacher ausgebildet als die hinten am Fahrzeug angeordnete Anhängerkupplung, die üblicherweise als automatische Kupplung ausgeführt ist.

Bei einer bekannten, vorne am Fahrzeug angeordneten Anhängerkupplung ist zwar eine sich in Richtung der Ausnehmung für den Kupplungsbolzen seitlich verjüngende Aufnahmeöffnung für die Anhängeröse vorgesehen, diese ist jedoch recht breit ausgebildet, d.h. ihre Abmessung in Breitenrichtung entspricht einem Vielfachen des Außendurchmessers der ringförmigen Anhängeröse. Abgesehen hiervon besitzt die Aufnahmeöffnung eine so große Tiefe, daß die Anhängeröse in ihrer durch den Kupplungsbolzen fixierten Stellung sowohl zu den Seitenwangen der Aufnahmeöffnung als auch zum Grund der Aufnahmeöffnung beabstandet angeordnet ist. Schließlich verlaufen die obere und untere Begrenzungsfläche der Aufnahmeöffnung im wesentlichen parallel zueinander.

Eine derartige Anhängerkupplung bedingt ein kompliziertes unfallträchtiges Kuppeln des Anhängers mit dem Lastkraftfahrzeug, landwirtschaftlichen Fahrzeug oder dgl.. So ist es bereits mit Schwierigkeiten verbunden, die von Hand auf die Höhe der Aufnahmeöffnung bewegte Anhängerdeichsel mit der Anhängeröse in die Aufnahmeöffnung einzuführen. Wegen der parallelen oberen und unteren Begrenzungsfläche der Aufnahmeöffnung muß die Anhängerdeichsel mit der Anhängeröse exakt auf die Höhe der Aufnahmeöffnung ausgerichtet werden, ferner ist es erforderlich, die Anhängeröse auch mittig zur Ausnahmeöffnung auszurichten, da die relativ große Breite der Ausnahmeöffnung und der sich hierdurch ergebende recht stumpfe Winkel der Aufnahmeöffnung beim Rangieren des Fahrzeuges nicht automatisch dazu führen werden, daß die Anhängeröse von sich aus in die mittige Position in der Aufnahmeöffnung überführt wird. Um daher die Anhängeröse mittig in die Aufnahmeöffnung einführen zu können, ist es Voraussetzung, daß das Fahrzeug exakt in diese Mittenstellung zur Anhängerdeichsel und damit Anhängeröse rangiert wird, da in den seltensten Fällen, insbesondere wenn der Anhänger beladen ist, die Möglichkeit besteht, die Deichsel nennenswert zu verschwenken. Gravierender ist jedoch der Umstand, daß bei der bekannten Anhängerkupplung die Anhängeröse bei in die Aufnahmeöffnung eingeführter Stellung keine definierte Position zur Ausnehmung für den Kupplungsbolzen und damit zu dem Kupplungsbolzen einnimmt. Es ist wiederum erforderlich, daß das Fahrzeug genau hin und her rangiert wird, wobei unter diesem Rangiervorgang höchstens wenige Zentimeter verstanden werden, um schließlich das Loch in der Anhängeröse in Deckung mit dem Kupplungsbolzen zu bringen. Während dieser Rangierarbeiten ist der im Bereich der Anhängerkupplung Arbeitende einer erhöhten Umfallgefährdung ausgesetzt, da er nicht nur ständig die Anhängerdeichsel auf dem der Aufnahmeöffnung entsprechenden Niveau halten muß, sondern dabei auch der Kupplungsbolzen zu bedienen ist, während die Anhängeröse in die Aufnahmeöffnung eingeführt und während des Rangiervorganges in dieser hin und herbewegt wird. Es ist leicht einsichtig, daß derartige Tätigkeiten im Bereich der Anhängerkupplung des rangierenden Fahrzeuges bevorzugt zu Quetschungen von Gliedmaßen führen, unter Umständen sogar zu deren Totalverlust.

Eine Anhängerkupplung der eingangs genannten Art ist aus der DE-A-1 580 618 bekannt. Bei dieser ist die Aufnahmeöffnung sehr breit ausgebildet und es verlaufen deren obere und untere Begrenzungsfläche parallel zueinander. Das eigentliche Kupplungsmaul der Anhängerkupplung nimmt eine mit diesem lösbar befestigte Einlage auf, die mit ihrer konvexen Außenkontur an der Innenkontur des Kupplungsmaules anliegt und innenseitig entsprechend der aufzunehmenden Anhängeröse profiliert ist.

Aus der BE-A-758 586 ist eine hinten an einem landwirtschaftlichen Fahrzeug angeordnete Aphängerkupplung bekannt, bei der das eigentliche, der Aufnahme der Anhängeröse dienende Kupplungsmaul in einer fahrzeugseitigen Lageraufnahme beweglich gelagert ist. Die Lagerung erfolgt derart, daß nicht nur eine Schwenkbewegung der Anhängeröse relativ zum Kupplungsmaul um die Achse des Kupplungsbolzens möglich ist, sondern auch eine Schwenkbewegung des Kupplungsmauls nach oben und unten sowie um die Längsachse der Anhängerkupplung. Die beiden letztgenannten Schwenkmöglichkeiten des Kupplungsmaul relativ zur Lageraufnabme gestatten es, Fahrzustände zu beherrschen, bei denen der Anhänger eine andere Steigung und/oder eine andere seitlich geneigte Fläche befährt als das gekoppelte Fahrzeug. Bei dem aus dieser Schrift bekannten Fahrzeug weist das Kupplungsmaul eine Aufnahmeöffnung auf, die im Bereich deren Grundes oben und unten parallel zueinander angeordnete Abschnitte besitzt. Auf der dem gekoppelten Fahrzeug abgewandten Seite des Kupplungsmaules verjüngen sich dessen beide Lippen nach oben bzw. nach unten, ferner zu den Seiten hin, die Lippen stehen über seitliche Bereiche des Kupplungsmauls hinaus, die zurückgesetzt, seitlich sich verjüngende Begrenzungen der breiten Aufnahmeöffnung darstellen. Ein federbelastetes Rastglied gestattet es, das Kupplungsmaul in einer definierten Stellung zur Lageraufnahme mit dem Anhänger zu kuppeln.

Es ist ferner eine hinten am Lastkraftfahrzeug, landwirtschaftlichen Fahrzeug oder dgl. angeordnete Anhängerkupplung bekannt, die nicht nur eine sich in Richtung der Ausnehmung für den Kupplungsbolzen seitlich verjüngende Aufnahmeöffnung für die Anhängeröse aufweist, sondern gleichfalls eine sich oben und unten in Richtung der Ausnehmung verjüngende, bei dieser Anhängerkupplung handelt es sich aber um eine automatische Kupplung, die wegen des dabei erhöhten technischen Aufwandes und der Baugröße für eine Verwendung vorne am Fahrzeug nicht geeignet ist.

Es ist Aufgabe der vorliegenden Erfindung, eine Anhängerkupplung der genannten Art zu schaffen, die baulich einfach gestaltet ist und es ermöglicht, die Anhängeröse unkompliziert und ohne die Gefahr von Verletzungen zu kuppeln.

Gelöst wird die Aufgabe bei einer Anhängerkupplung der eingangs genannten Art dadurch, daß die Aufnahmeöffnung sich oben und unten bis zum Grund der Aufnahmeöffnung verjüngt.

Die erfindungsgemäße Ausbildung der vorne am Fahrzeug angeordneten Anhängerkupplung ermöglicht zunächst ein einfaches Einführen der Anhängerdeichsel mit der Anhängeröse in die Aufnahmeöffnung, die nicht nur seitlich sondern auch oben und unten in Richtung des Grundes der Aufnahmeöffnung verjüngt ausgebildet ist. Darüber hinaus entfällt bei der Anhängerkupplung ein aufwendiges Rangieren des Fahrzeuges bezüglich des Anhängers, da die einmal in den erweiterten Bereich der Aufnahmeöffnung eingeführte Anhängeröse beim aufeinander zubewegen von Anhänger und Rangierfahrzeug automatisch gegen die Anlagestellen in der Aufnahmeöffnung bewegt wird und es dann infolge des Zusammenfallens der Mittelachse der Anhängeröse mit der Mittelachse des Kupplungsbolzens nur noch erforderlich ist, letztgenannten in dieser Anlageposition durch die Anhängeröse durchzustecken. Das Kuppeln eines Anhängers kann somit bei Verwendung der erfindungsgemäßen Anhängerkupplung durch den Fahrer allein erfolgen.

Gemäß einer besonderen Ausführungsform der Erfindung ist vorgesehen, daß die Seitenwangen der Aufnahmeöffnung die Anlagestellen für die Anhängeröse bilden. Aufgrund der Konizität der Seitenwangen ist damit ein Überführen der Anhängeröse in die definierte Stellung bezüglich des Kupplungsbolzens auf einfachste Art und Weise möglich, daneben besteht selbstverständlich auch die Möglichkeit, den Grund der Ausnahmeöffnung als Anlagestelle zu wählen.

Da die vorne am Fahrzeug angeordnete Anhängerkupplung nur dem Rangieren des Anhängers dient und demzufolge nicht den Beanspruchungen einer hinten am Fahrzeug angeordneten Anhängerkupplung unterworfen ist, reiches es völlig aus, wenn der Kupplungsbolzen mit Spiel in die Anhängeröse steckbar ist. Unter Spiel soll dabei eine solche Differenz zwischen dem Außendurchmesser des Kupplungsbolzen und dem Innendurchmesser der Anhängeröse verstanden werden, das einerseits einen sicheren Halt der Anhängerdeichsel, andererseits ein einfaches Einführen des Kupplungsbolzens in die Anhängeröse ermöglicht, und dies selbst dann, wenn die Anhängeröse in dem mit der Anlagestelle in Anlage gelangenden Bereich oder aber die Anlagestelle selbst verschmutzt sein sollten und sich dadurch eine geringfügige Verschiebung der Mittelachse der Anhängeröse zur Mittelachse des Kupplungsbolzens ergibt.

Eine Weiterbildung der Erfindung sieht vor, daß die Aufnahmeöffnung in die Frontstoßstange des Fahrzeuges integriert ist. Um den Kupplungsbolzen nicht von Hand betätigen zu müssen, kann ein mit diesem zusammenwirkendes Kraftmittel, insbesondere eine mit diesem verbundene Feder oder ein Pneumatikzylinder vorgesehen sein. Aus Platzgründen sollte das Kraftmittel unterhalb des Kupplungsbolzens angeordnet sein und an dessen unterem Ende angreifen.

Weitere Merkmale der Erfindung sind in der Beschreibung der Figuren und in den Unteransprüchen dargestellt, wobei bemerkt wird, daß alle Einzelmerkmale und alle Kombinationen von Einzelmerkmalen erfindungswesentlich sind.

In den Figuren ist die Erfindung an einer Ausführungsform beispielsweise dargestellt, ohne auf diese Ausführungsform beschränkt zu sein. Es zeigt:
- Figur 1: eine Frontansicht des unteren Bereiches eines Lastkraftfahrzeuges mit der vorne am Fahrzeug angeordneten erfindungsgemäßen Anhängerkupplung,

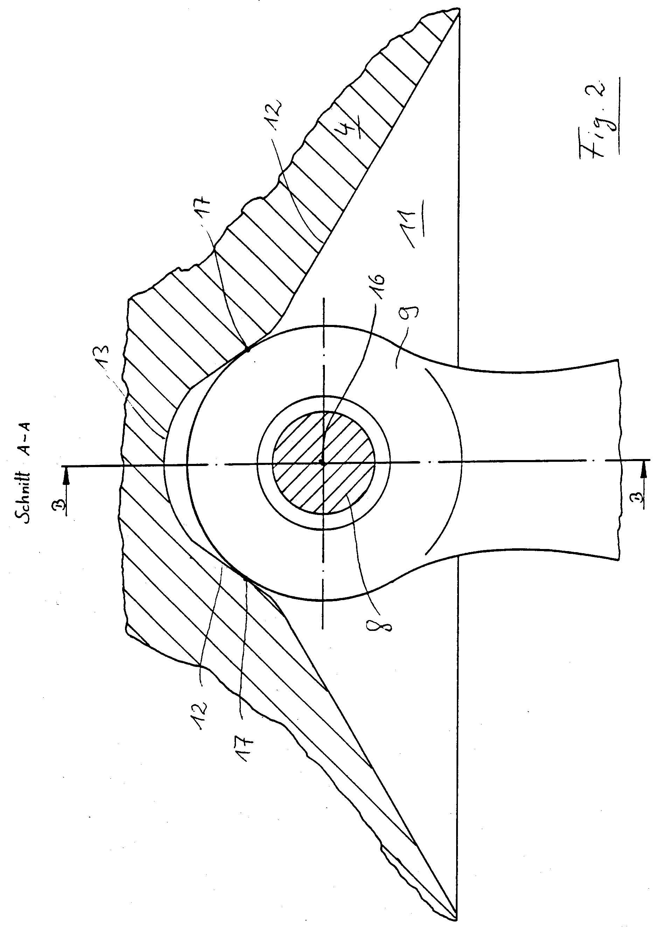

- Figur 2: einen Schnitt durch die Anhängerkupplung gemäß der Linie A-A in Figur 1 und
- Figur 3: einen Schnitt durch die Anhängerkupplung gemäß der Linie B-B in Figur 2.

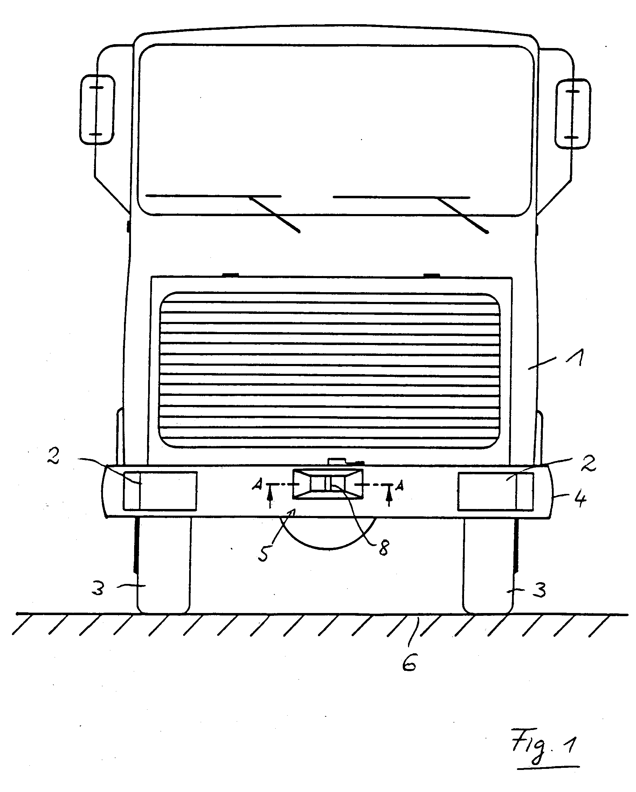

Figur 1 zeigt den Vorderbau 1 des Lastkraftwagens mit den Frontlampen 2, ferner die vorderen Räder 3 des Fahrzeuges sowie dessen Stoßstange 4 und die erfindungsgemäße Anhängerkupplung 5.

Auf die Fahrbahn 6 bezogen besitzt die Anhängerkupplung 5 eine senkrechte Ausnehmung 7, in die ein Kupplungsbolzen 8 einführbar ist und der in der eingeführten Stellung eine ringförmige Anhängeröse 9 einer nicht näher dargestellten Anhängerdeichsel mit Spiel durchsetzt. Die Anhängerkupplung 5 bildet einen Teil der Stoßstange 4, zwischen deren beiden die Ausnehmungen 7 aufweisenden Schenkel 10 eine Aufnahmeöffnung 11 für die Anhängeröse 9 gebildet ist. Die Aufnahmeöffnung 11 verjüngt sich mit ihren symmetrisch zur Achse B-B angeordneten Seitenflächen 12 in Richtung der Ausnehmung 7 für den Kupplungsbolzen 8 und darüber hinaus in Richtung des Grundes 13 der Aufnahmeöffnung 11. Oben und unten weist sie eine Bodenfläche 14 und eine Deckfläche 15 auf, die zunächst geringfügig konisch aufeinanderzu laufen und dann zum Grund 13 hin stärker konisch.

Durch die Flächen 12, 14 und 15 wird damit eine Aufnahmeöffnung 11 geschaffen, die sich allseitig zum Grund 13 hin verjüngt. Beim Einführen der ringförmigen Anhängeröse 9 in das Maul der Anhängerkupplung liegt die Anhängeröse mit deren Umfangsstellen 17 an den Flächen 12, 14 und 15 der Aufnahmeöffnung 11 an. Der Abstand der Mittelachse 16 des Kupplungsbolzens 8 von den jeweiligen Anlagestellen 17 der Anhängeröse 9 in der Aufnahmeöffnung 11 entspricht dabei dem Abstand der Mittelachse 16 der Anhängeröse 9 von den Anlagestellen 17.

Die zuvor beschriebene erfindungsgemäße Anhängerkupplung ermöglicht das Einführen der ringförmigen Anhängeröse 9 des Anhängers in eine definierte Position in die Aufnahmeöffnung 11 der Anhängerkupplung 5. Die Seitenflächen 12 und die Bodenfläche 14 sowie Deckfläche 15 bewirken zunächst ein paßgenaues Einführen der Anhängeröse 9 in die Aufnahmeöffnung 11 bis die Anhängeröse 9 außen in den Anlagestellen 17 anliegt. In dieser Position ermöglicht die genaue Zuordnung der identischen Mittelachsen der Anhängeröse 9 und des Kupplungsbolzens 8 ein paßgenaues Durchstecken des Kupplungsbolzens 8 durch die Anhängeröse 9, wobei das Spiel zwischen den beiden Teilen auch dann noch ein umproblematisches Verbinden ermöglicht, wenn zwischen den Flächen 12, 14 und 15 und der Anhängeröse 9 befindlicher Schmutz zu einer geringfügigen Verschiebung der Anlagestellen 17 führen würde.

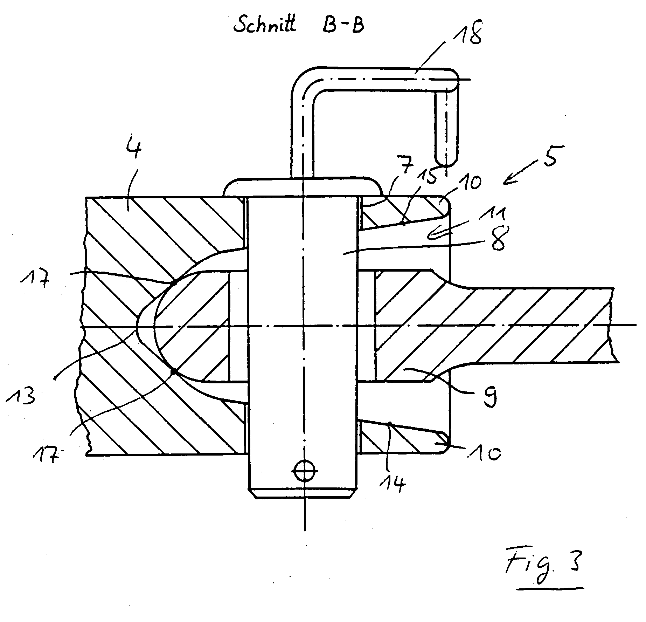

Wie der Darstellung der Figuren 1 und 3 zu entnehmen ist, erfolgt die Betätigung des Kupplungsbolzens 8 mittels eines mit dem Bolzen 8 verbundenen Handgriffes 18, wobei diese Betätigung natürlich auch durch ein Kraftmittel geschehen kann, beispielsweise durch eine Feder oder auch pneumatisch.

Die erfindungsgemäße Anhängerkupplung ist nicht nur auf Lastkraftfahrzeuge oder landwirtschaftliche Fahrzeuge beschränkt, sondern kann bei all solchen Fahrzeugen Anwendung finden, mit denen Rangiervorgänge vorzunehmen sind, hierunter fallen auch Fahrzeuge, die nicht kraftbetrieben sind.

## Patentansprüche

1. Anhängerkupplung (5) für Lastkraftfahrzeuge, landwirtschaftliche Fahrzeuge oder dergleichen, die vorne am Fahrzeug (1) angeordnet und mit einem in eine senkrechte Ausnehmung (7) einführbaren Kupplungsbolzen (8) versehen ist, der in eingeführter Stellung eine ringförmige Anhängeröse (9) durchsetzt, wobei die Anhängerkupplung (5) eine sich in Richtung der Ausnehmung (7) für den Kupplungsbolzen (8) seitlich verjüngende Aufnahmeöffnung (11) für die Anhängeröse (9) aufweist, sowie der Abstand der Mittelachse (16) des Kupplungsbolzens (8) von den Anlagestellen (17, 17) der Anhängeröse (9) in der Aufnahmeöffnung (11) dem Abstand der Mittelachse (16) der Anhängeröse (9) von den Anlagestellen (17, 17) entspricht, **dadurch gekennzeichnet,** daß die Aufnahmeöffnung (11) sich oben und unten bis zum Grund (13) der Aufnahmeöffnung (11) verjüngt.

2. Anhängerkupplung nach Anspruch 1 , dadurch gekennzeichnet, daß die Seitenwangen (12, 12) der Aufnahmeöffnung (11) die Anlagestellen (17, 17) für die Anhängeröse (9) bilden.

3. Anhängerkupplung nach Anspruch 1 oder 2, dadurch gekennzeichnet, daß der Kupplungsbolzen (8) mit Spiel in die Anhängeröse (9) steckbar ist.

4. Anhängerkupplung nach einem der vorhergehenden Ansprüche, dadurch gekennzeichnet, daß die Aufnahmeöffnung (11) in die Frontstoßstange (4) des Fahrzeuges (1) integriert ist.

5. Anhängerkupplung nach einem der vorhergehenden Ansprüche, dadurch gekennzeichnet, daß der Kupplungsbolzen (8) durch ein Kraftmittel, insbesondere eine mit diesem verbundene Feder oder einen Pneumatikzylinder betätigbar ist.

6. Anhängerkupplung nach Anspruch 5, dadurch gekennzeichnet, daß das Kraftmittel unterhalb des Kupplungsbolzens (8) angeordnet ist und an dessen unterem Ende angreift.

## Claims

1. A trailer coupling (5) for commercial motor vehicles, agricultural vehicles or the like, which is disposed at the front of the vehicle (1) and is provided with a coupling pin (8) which can be inserted in a vertical recess (7) and which passes through an annular trailer loop (9) in its inserted position, wherein the trailer coupling (5) has a locating aperture (11) for the trailer loop (9) tapering laterally in the direction of the recess (7) for the coupling pin (8), and the distance of the centre line (16) of the coupling pin (8) from the contact points (17, 17) of the trailer loop (9) in the locating aperture (11) corresponds to the distance of the centre line (16) of the trailer loop (9) from the contact points (17, 17), characterised in that the locating aperture (11) tapers at the top and at the bottom towards the root (13) of the locating aperture (11).

2. A trailer coupling according to Claim 1, characterised in that the side cheeks (12, 12) of the locating aperture (11) form the contact points (17, 17) for the trailer loop (9).

3. A trailer coupling according to Claim 1 or 2, characterised in that coupling pin (8) can be inserted into the trailer loop (9) with a clearance.

4. A trailer coupling according to any one of the preceding Claims, characterised in that the locating aperture (11) is incorporated in the front bumper (4) of the vehicle (1).

5. A trailer coupling according to any one of the preceding Claims, characterised in that the coupling pin (8) can be actuated by a means of force, particularly a spring or a pneumatic cylinder connected to it.

6. A trailer coupling according to Claim 5, characterised in that the means of force is disposed underneath the coupling pin (8) and engages with the lower end of the latter.

## Revendications

1. Attelage (5) pour camions, véhicules agricoles ou similaires, monté à l'avant sur le véhicule (1) et pourvu d'un goujon d'accouplement (8) pouvant être introduit dans un évidement perpendiculaire (7), goujon qui, quand il est dans la position enfilée, passe à travers un oeillet d'accrochage (9), l'attelage (5) présentant une ouverture réceptrice (11) pour l'oeillet d'accrochage (9), se rétrécissant latéralement en direction de l'évidement (7) pour le goujon d'accouplement (8), de même que la distance de l'axe médian (16) du goujon d'accouplement (8) par rapport aux positions d'appui (17, 17) de l'oeillet d'accrochage (9) dans l'ouverture réceptrice (11) correspond à la distance de l'axe médian (16) de l'oeillet d'accrochage (9) par rapport aux positions d'appui (17, 17), attelage caractérisé en ce que l'ouverture réceptrice (11) se rétrécit en haut et en bas jusqu'au fond (13) de l'ouverture réceptrice (11).

2. Attelage selon la revendication 1, caractérisé en ce que les joues latérales (12, 12) de l'ouverture réceptrice (11) forment les positions d'appui (17, 17) pour l'oeillet d'accrochage (9).

3. Attelage selon la revendication 1 ou 2, caractérisé en ce que le goujon d'accouplement (8) peut être enfoncé avec du jeu dans l'oeillet d'accrochage (9).

4. Attelage selon l'une des revendications précédentes, caractérisé en ce que l'ouverture réceptrice (11) est intégrée dans le pare-choc avant (4) du véhicule (1).

5. Attelage selon l'une des revendications précédentes, caractérisé en ce que le goujon d'accouplement (8) peut être actionné par un moyen développant une force, en particulier un ressort relié à celui-ci ou un vérin pneumatique.

6. Attelage selon la revendication 5, caractérisé en ce que le moyen développant une force est disposé en-dessous du goujon d'accouplement (8) et vient en prise sur son extrémité inférieure.
